# EUROPEAN PATENT SPECIFICATION

(11) **EP 1 888 940 B1**
(45) Date of publication and mention of the grant of the patent: **26.09.2012**
(21) Application number: 06744021.4
(22) Date of filing: 25.05.2006
(51) Int. Cl.: F16F 7/12, A62B 35/04

(54) **SHOCK ABSORBER**
STOSSDÄMPFER
AMORTISSEUR

(30) Priority: 25.05.2005 GB 0510653
(43) Date of publication of application: 20.02.2008
(73) Proprietor: Rapid Rail International Limited, Cwmbran Gwent NP44 3AB (GB)
(72) Inventor: WARREN, Bernard Rapid Rail International Limited, Cwmbran Gwent NP44 3AB (GB)
(74) Representative: Whitfield, Gillian Janette
(86) International application number: PCT/GB2006/001956
(87) International publication number: WO 2006/126012

(56) References cited:
- GB-A- 2 396 195
- US-A- 4 791 243
- US-A1- 2003 111 310
- US-B1- 6 457 556

## Description

### Background to the invention

The present invention relates to a single-shock-use shock absorber.

It is known for fall arrest systems to incorporate a shock absorber in which a textile element tears at stitching and/or stitched fabric to absorb energy in decelerating a falling man prior to the force arising from his full momentum being resisted by a rope or cable alone. Examples of such fall arrest systems can be found in US-B1-6457566 (SKADE TORALF et al, 2002-10-01) and US-A-4791243 (IBANEZ et al, 1988-12-13). If a shock absorber is not provided, much higher shock loads are experience throughout the fall arrest system and indeed by the man. These can be damaging to the system and the man.

It is known to absorb shock by plastic deformation, typically of a single-shock-use metallic element.

By single-shock-use is intended that the clement may carry loads well below the load at which it deforms plastically, but once it has deformed plastically, it should be discarded.

A problem with a device that is intended to deform plastically under shock loading may deform appreciably elastically under lesser loads to such extent as to interfere with other devices under ordinary usage. For instance, it may open elastically and pinch something on closure.

### Summary of the Invention

The present invention seeks to address the problems of the prior art by providing an improved shock absorber.

Accordingly, a first aspect of the present invention provides a single-shock-use shock absorber having:
a first load application point to attach to a load;
a second load application point to attach to a fall arrest system;
a deformable element between the points, the element being dimensioned for plastic shock absorbing deformation; and
a bridge between the first and second load application points, the bridge dimensioned to fracture at a predetermined load less than that at which the element deforms plastically, wherein the deformable element extends around the second load application point.

In this way, when a load of a predetermined value is applied to the two load application points, there is controlled spatial separation of the two load points with a resultant absorption of energy by the shock absorber thereby reducing the rate of fall of a falling load, such as an initially free falling man at a level which does not expose him to damaging shock loads, and does not over-load the fall arrest system in which the shock absorber is incorporated.

It will be appreciated that the dimensions of the bridge which may be varied to allow the bridge to fracture at a predetermined load include but are not limited to the width, shape, contours of the bridge. In addition, it will be appreciated that the material of which the bridge is composed will also influence the load at which the bridge will fracture. All of these factors may be used to produce a bridge which will fracture at a predetermined load less than that at which the deformable element deforms plastically.

The deformable element may comprise a coil of plastically deformable material.

Whist it is envisaged that the element may be arranged for its plastic deformation to be in tension and may optionally also be in torsion, allowing progressive winding or unwinding of the element.

Further, it can be envisaged that the bridge may act directly between the two load application points. However, in the preferred embodiment, the bridge is at one of the load application points and bridges a coil of the element, which passes around the other load application point, the bridged coil acting as a link with the second load application point whilst the bridge remains intact.

A shock absorber according to any aspect of the present invention may comprise any suitable plastically deformable material such as metal or any suitable plastic or rubberised material or any other suitable material known to the skilled person and appropriate for the purpose.

The form of the shock absorber may be produced by laser cutting, casting, pressing, machining, moulding or by any suitable method known to the skilled person.

In one embodiment, the shock absorber comprises a metal plate, laser cut as a plastically deformable spiral around the second load application point, with the bridge bridging the last coil of the spiral at the first load application point.

When the deformable element unwinds under tension, it stops unwinding when the final load point is reached i.e. the deformable element stops unwinding when the deformable element spiral formation has fully unwound, and is capable of continuing to support a load even when fully unwound. In other words, once the deformable element has unwound under tension, the shock absorber is able to support a load and does not tear under continuing applied tension. Thus, any falling load, such as a falling person whose fall is arrested and whose shock load is absorbed at least in part through the unwinding of the deformable element will not resume falling when the deformable element has unwound. Instead, the unwound deformable element will be capable of supporting the load or person whose fall has been arrested, such that the load or person is prevented from falling further.

In one embodiment the bridge is formed directly between the two load application points.

In a further embodiment, the single-shock-use shock absorber according to the present invention comprising two bridges between the first and second load application points, each bridge dimensioned to fracture at a predetermined load less than that at which the element deforms plastically.

In one embodiment, the deformable element comprises a metal plate with a groove running around the second load application point in a spiral formation.

One or more bridges may be formed along the length of the groove.

A further aspect of the present invention provides a fall arrest device comprising one or more single-shock-use shock absorbers according to a first aspect of the present invention.

When multiple single-shock-use shock absorbers are used in a single fall arrest device, they may be provided in series such that the combination of shock absorbers act to absorb a greater amount of energy than would be absorbed by a single shock absorber. Thus, a user may select the appropriate number of shock absorbers to be used in combination to provide a shock absorber capable of withstanding fracture until application of a load greater than could be withstood by a single shock absorber.

A further aspect of the present invention provides a fall arrest system comprising a fall arrest device according to a preceding aspect of the present invention.

### Brief Description of the Drawings

Embodiments of the present invention will now be described, by way of example only, and with reference to the accompanying figures, in which:
Figure 1 is a perspective view of an embodiment of a shock absorber according to the present invention;
Figure 2 is a side view of a further embodiment of a shock absorber according to the present invention;
Figure 3 is a perspective view of the embodiment of figure 2;
Figure 4 is a side view of a further embodiment of a shock absorber according to the present invention;
Figure 5 is a perspective view of the embodiment of figure 4 with the spiral laser cuts shown using dashed lines;
Figure 6 is a side view of a further embodiment of a shock absorber according to the present invention, and
Figure 7 is a perspective view of the embodiment of figure 6.

### Detailed Description of the Invention

Referring to the drawing, the shock absorber 1 is laser cut from stainless steel. It has a 10 mm central bore 2 via which it attaches to an element of a fall arrest system or the like using a pin, axle or the like (neither shown) to apply load. From a crack limitation drilling 3, a spiral laser cut 4 spirals out 2.5 or other desired number of turns, leaving a spiral element ranging from 5 mm to 14 mm between the cuts depending on energy absorption requirement. A complete inner eye 5 is left around the central bore 2. The shock absorber 1 has a thickness of 8 mm. The laser cut terminates at an outer eye 6 with a 18 mm bore for attachment of a karabiner via a webbing link (neither shown). In use, the karabiner couples load from a man using the shock absorber in a fall arrest system to a standing part of the system, via further parts of the system which are not shown.

The outer contour of the shock absorber is laser cut, with a re-entrant 7, which approaches within 2 mm of the outer end 8 of the spiral cut, leaving a 2mm bridge 9 connecting the outer eye 6 to the outer coil 10 of the spiral element. This encircles the inner eye, with the interposition of inner coils 11.

When accidental or intentional low loads are applied between the eyes 5, 6, the bridge and the outer coil transfer these to the eyes.

When a serious accidental load is applied, as in a man falling from a tower on which the fall arrest system is installed, the karabiner applies to the bridge a force in excess of its ability to support. It fails in tension, with fracture propagating from the re-entrant or the outer end of the spiral towards each other. This failure does not materially weaken the outer eye or the outer coil. The shock absorber then comprises 2.5 turns of the spiral coil wound around the inner eye. This arrangement is such that the coil straightens progressively from the outer to the inner with plastic deformation and significant unwinding. It will be appreciated that significant work is required form this deformation and that a significant amount of energy can be absorbed in the unwinding of the coils, as is suitable for reducing deceleration of an initially free falling man at a level which does not expose him to damaging shock loads, complies to current legislation and does not over-load the fall arrest system in which the shock absorber is incorporated.

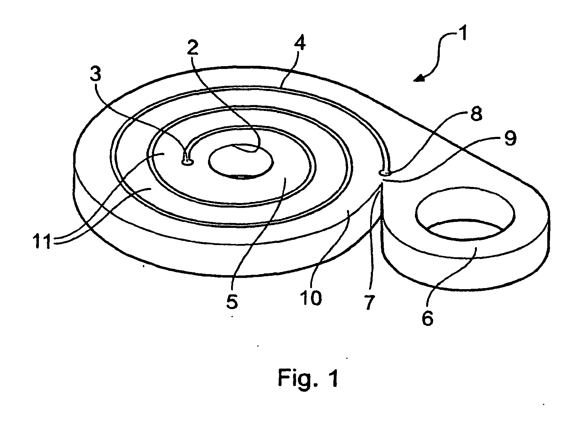

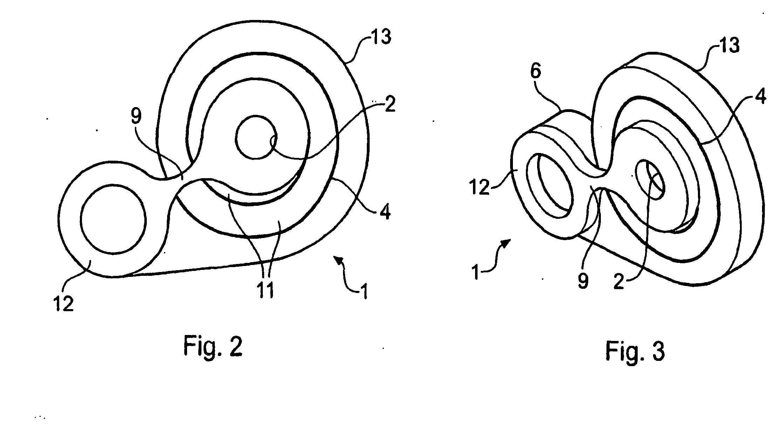

Figures 2 and 3 illustrate a further embodiment of a shock absorber according to the present invention. Similar reference numerals have been used in figures 1, 2 and 3 to identify similar features of the embodiments.

Figures 2 and 3 show a shock absorber 1 having a central bore 2 via which it attaches to an element of a fall arrest system or the like using a pin, axle or the like (neither shown) to apply load. A spiral laser cut 4 spirals out a desired number of turns outwards from central bore 2, leaving a spiral element or coil ranging from 5 mm to 14 mm between the cuts depending on energy absorption requirement. A complete inner eye (not shown) is left around the central bore 2.

Shock absorber 1 is also provided with a bridging member 12 which is in non-releasable engagement with the main body 13 of shock absorber 1. Bridging member 12 comprises two bores corresponding to central bore 2 and outer eye 6 of the main body 13 of shock absorber 1, each bore being connected via bridge 9. Unlike the embodiment of figure 1, no bridge is formed in the spiral element itself.

When a serious accidental load is applied, as in a man falling from a tower on which the fall arrest system is installed, the karabiner applies to the bridge a force in excess of its ability to support. When such a force is applied to the bridging member 12, bridge 9 fractures and the coil straightens progressively from the outer to the inner with plastic deformation and significant unwinding. It will be appreciated that significant work is required form this deformation and that a significant amount of energy can be absorbed in the unwinding of the coils, as is suitable for reducing deceleration of an initially free falling man at a level which does not expose him to damaging shock loads, complies to current legislation and does not over-load the fall arrest system in which the shock absorber is incorporated.

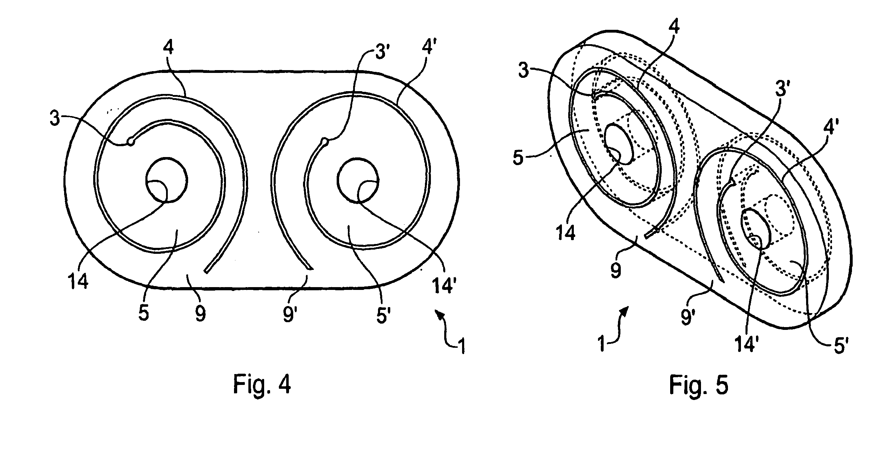

Figures 4 and 5 show a further embodiment of the present invention. Shock absorber 1 comprises two bores 14, 14'. The karabiner of a user may be connected to one bore and the other bore connected to the standing part of a fall arrest system (not shown).

From each crack limitation drillings 3, 3', a spiral laser cut 4, 4' spirals out respectively 2.5 or other desired number of turns, leaving spiral elements or coils ranging from 5 mm to 14 mm between the cuts depending on energy absorption requirement. A complete inner eye 5, 5' is left around each bore 14, 14'. Bridges 9, 9' are provided which connect the spiral element with the outer surface of the shock absorber 1.

When a serious accidental load is applied, as in a man falling from a tower on which the fall arrest system is installed, the karabiner applies to the bridges 9, 9' a force in excess of its ability to support. When such a force is applied to the shock absorber 1, bridges 9, 9' fracture and the coils straightens progressively from the outer to the inner with plastic deformation and significant unwinding. It will be appreciated that significant work is required form this deformation and that a significant amount of energy can be absorbed in the unwinding of the coils, as is suitable for reducing deceleration of an initially free falling man at a level which does not expose him to damaging shock loads, complies to current legislation and does not over-load the fall arrest system in which the shock absorber is incorporated.

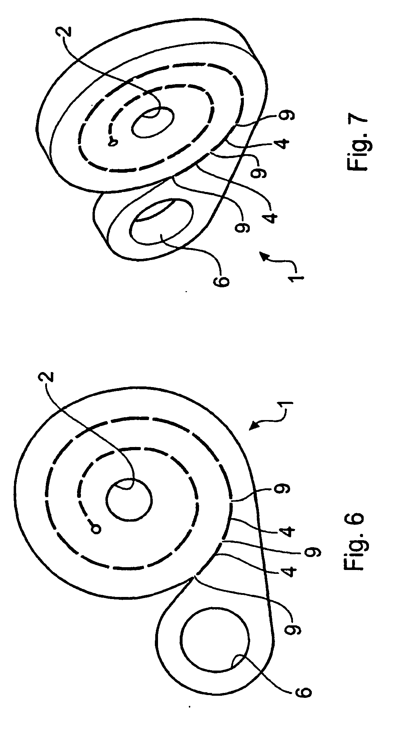

Figures 6 and 7 show a further embodiment of the present invention in which shock absorber 1 comprises a central bore 2 via which it attaches to an element of a fall arrest system or the like using a pin, axle or the like (neither shown) to apply load. A series of laser cuts 4 spiral out a desired number of turns outwards from central bore 2, leaving a partially cut spiral element or coil ranging from 5 mm to 14 mm between the series of laser cuts 4 depending on energy absorption requirement. A complete inner eye is left around the central bore 2.

Outer eye 6 is provided with a 18 mm bore for attachment of a karabiner via a webbing link (neither shown). In use, the karabiner couples load from a man using the shock absorber in a fall arrest system to a standing part of the system, via further parts of the system which are not shown.

The regions of uncut shock absorber adjacent each laser cut 4 act as a series of bridging members 9.

When a serious accidental load is applied, as in a man falling from a tower on which the fall arrest system is installed, the karabiner apply to the series of bridging members 9 a force in excess of its ability to support. When such a force is applied to the bridging members 9, one by one the bridging members 9 fracture and the coil straightens progressively from the outer to the inner with plastic deformation and significant unwinding. It will be appreciated that significant work is required form this deformation and that a significant amount of energy can be absorbed in the unwinding of the coils, as is suitable for reducing deceleration of an initially free falling man at a level which does not expose him to damaging shock loads, complies to current legislation and does not over-load the fall arrest system in which the shock absorber is incorporated.

Although aspects of the invention have been described with reference to the embodiments shown in the accompanying drawings, it is to be understood that the invention is not limited to the precise embodiment shown and that various changes and modifications may be effected without further inventive skill and effort. For example, although the shock absorber is described mainly in terms of absorbing the shock from a failing person, it will be readily appreciated that the shock absorber of the present invention may find equal application in the support of loads such as lifts or over-running machinery for example where machinery runs past safety buffers, or may be used in any other suitable application where shock loading may occur.

## Claims

1. A single-shock-use shock absorber (1) having:
a first load application point (6) to attach to a load;
a second load application point (5) to attach to a fall arrest system;
a deformable element between the points, the element being dimensioned for plastic shock absorbing deformation; and
a bridge (9) between the first and second load application points, the bridge (9) dimensioned to fracture at a predetermined load less than that at which the element deforms plastically,
wherein the deformable element extends around the second load application point (5).

2. A single-shock-use shock absorber (1) according to Claim 1, wherein the plastic deformation of the element occurs under torsion.

3. A single-shock-use shock absorber (1) according to Claim 1, wherein the plastic deformation of the element occurs under tension.

4. A single-shock-use shock absorber according to any preceding Claim, wherein the bridge (9) is adjacent the first load application point (6).

5. A single-shock-use shock absorber according to Claim 4, wherein the bridge (9) bridges a coil of the coiled element which passes around the second load application point (5).

6. A single-shock-use shock absorber according to Claim 5, wherein the shock absorber comprises a plastically deformable spiral around the second load application point (5) with the bridge (9) bridging the last coil of the spiral at the first load application point (6).

7. A single-shock-use shock absorber according to Claim 6, wherein the last coil (11) comprises the outermost coil of the spiral.

8. A single-shock-use shock absorber according to Claim 4, wherein the bridge (9) is formed directly between the two load application points (5,6).

9. A single-shock-use shock absorber according to Claim 4, comprising two bridges (9, 9') between the first and second load application points (5, 5'), each bridge dimensioned to fracture at a predetermined load less than that at which the element deforms plastically.

10. A single-shock-use shock absorber according to any one of Claims 1 to 3. wherein the deformable element comprises a metal plate with a groove running (4) around the second load application point in a spiral formation.

11. A single-shock-use shock absorber according to Claim 10, comprising one or more bridges (9) formed along the length of the groove (4).

12. A single-shock-use shock absorber according to any preceding Claim, wherein the shock absorber is formed from a laser cut metal plate.

13. A single-shock-use shock absorber according to any preceding Claim, wherein the narrowest dimension of the bridge is the narrowest dimension of the portion of the shock absorber located between the first and second load application points (6, 5).

14. A fall arrest device comprising one or more single-shock-use shock absorbers according to any one of Claims 1 to 13.

15. A fall arrest system comprising a fall arrest device according to Claim 14.

## Patentansprüche

1. Stoßdämpfer (1) für einmaligen Stoß, aufweisend:
einen ersten Lastangriffspunkt (6) zum Anbringen an eine Last;
einen zweiten Lastangriffspunkt (5) zum Anbringen an einem Fallschutzsystem;
ein verformbares Element zwischen den Punkten, wobei das Element für plastische stoßdämpfende Verformung bemessen ist; und
eine Brücke (9) zwischen dem ersten und zweiten Lastangriffspunkt, wobei die Brücke (9) zum Brechen bei einer vorgegebenen Last bemessen ist, die geringer ist als jene, bei der sich das Element plastisch verformt;
wobei das verformbare Element um den zweiten Lastangriffspunkt (5) herum verläuft.

2. Stoßdämpfer (1) für einmaligen Stoß nach Anspruch 1, wobei die plastische Verformung des Elements unter Torsion erfolgt.

3. Stoßdämpfer (1) für einmaligen Stoß nach Anspruch 1, wobei die plastische Verformung des Elements unter Spannung erfolgt.

4. Stoßdämpfer für einmaligen Stoß nach einem der vorhergehenden Ansprüche, wobei die Brücke (9) dem ersten Lastangriffspunkt (6) benachbart ist.

5. Stoßdämpfer für einmaligen Stoß nach Anspruch 4, wobei die Brücke (9) eine Wicklung des gewickelten Elements überbrückt, die um den zweiten Lastangriffspunkt (5) läuft.

6. Stoßdämpfer für einmaligen Stoß nach Anspruch 5, wobei der Stoßdämpfer eine plastisch verformbare Spirale um den zweiten Lastangriffspunkt (5) umfasst, wobei die Brücke (9) die letzte Wicklung der Spirale am ersten Lastangriffspunkt (6) überbrückt.

7. Stoßdämpfer für einmaligen Stoß nach Anspruch 6, wobei die letzte Wicklung (11) die äußerste Wicklung der Spirale umfasst.

8. Stoßdämpfer für einmaligen Stoß nach Anspruch 4, wobei die Brücke (9) direkt zwischen den zwei Lastangriffspunkten (5, 6) ausgebildet ist.

9. Stoßdämpfer für einmaligen Stoß nach Anspruch 4, umfassend zwei Brücken (9, 9') zwischen dem ersten und zweiten Lastangriffspunkt (5, 5'), wobei jede Brücke zum Brechen bei einer vorgegebenen Last bemessen ist, die geringer ist als jene, bei der sich das Element plastisch verformt.

10. Stoßdämpfer für einmaligen Stoß nach einem der Ansprüche 1 bis 3, wobei das verformbare Element eine Metallplatte mit einer Nut (4) umfasst, die in Spiralform um den zweiten Lastangriffspunkt läuft.

11. Stoßdämpfer für einmaligen Stoß nach Anspruch 10, umfassend eine oder mehr Brücken (9), die entlang der Länge der Nut (4) ausgebildet sind.

12. Stoßdämpfer für einmaligen Stoß nach einem der vorhergehenden Ansprüche, wobei der Stoßdämpfer aus einer lasergeschnittenen Metallplatte ausgebildet ist.

13. Stoßdämpfer für einmaligen Stoß nach einem der vorhergehenden Ansprüche, wobei die schmalste Abmessung der Brücke die schmalste Abmessung des Abschnitts des Stoßdämpfers ist, der sich zwischen dem ersten und zweiten Lastangriffspunkt (5, 6) befindet.

14. Fallschutzvorrichtung, aufweisend einen oder mehrere Stoßdämpfer für einmaligen Stoß nach einem der Ansprüche 1 bis 13.

15. Fallschutzsystem, umfassend eine Fallschutzvorrichtung nach Anspruch 14.

## Revendications

1. Absorbeur de choc à utilisation pour un seul choc (1) comportant :
un premier point d'application de charge (6) pour fixer une charge :
un deuxième point d'application de charge (5) pour fixer un système d'arrêt des chutes ;
un élément pouvant être déformé entre les points, l'élément étant dimensionné pour une déformation par absorption de choc plastique ; et
un pont (9) entre les premier et deuxième points d'application de charge, le pont (9) étant dimensionné pour se casser à une charge prédéterminée inférieure à celle à laquelle l'élément se déforme de manière plastique,
dans lequel l'élément pouvant être déformé s'étend autour du deuxième point d'application de charge (5).

2. Absorbeur de choc à utilisation pour un seul choc (1) selon la revendication 1, dans lequel la déformation plastique de l'élément survient sous torsion.

3. Absorbeur de choc à utilisation pour un seul choc (1) selon la revendication 1, dans lequel la déformation plastique de l'élément survient sous tension.

4. Absorbeur de choc à utilisation pour un seul choc selon l'une quelconque des revendications précédentes, dans lequel le pont (9) est adjacent au premier point d'application de charge (6).

5. Absorbeur de choc à utilisation pour un seul choc selon la revendication 4, dans lequel le pont (9) relie un enroulement de l'élément enroulé qui passe autour du deuxième point d'application de charge (5).

6. Absorbeur de choc à utilisation pour un seul choc selon la revendication 5, où l'absorbeur de choc comprend une spirale pouvant être déformée de manière plastique autour du deuxième point d'application de charge (5), le pont (9) reliant le dernier enroulement de la spirale au niveau du premier point d'application de charge (6).

7. Absorbeur de choc à utilisation pour un seul choc selon la revendication 6, dans lequel le dernier enroulement (11) comprend l'enroulement le plus à l'extérieur de la spirale.

8. Absorbeur de choc à utilisation pour un seul choc selon la revendication 4, dans lequel le pont (9) est formé directement entre les deux points d'application de charge (5, 6).

9. Absorbeur de choc à utilisation pour un seul choc selon la revendication 4, comprenant deux ponts (9, 9') entre les premier et deuxième points d'application de charge (5, 5'), chaque pont étant dimensionné pour se casser à une charge prédéterminée inférieure à celle à laquelle l'élément se déforme de manière plastique.

10. Absorbeur de choc à utilisation pour un seul choc selon l'une quelconque des revendications 1 à 3. dans lequel l'élément pouvant être déformé comprend une plaque métallique dotée d'une rainure (4) s'étendant autour du deuxième point d'application de charge selon une formation en spirale.

11. Absorbeur de choc à utilisation pour un seul choc selon la revendication 10, comprenant un ou plusieurs ponts (9) formés suivant la longueur de la rainure (4).

12. Absorbeur de choc à utilisation pour un seul choc selon l'une quelconque des revendications précédentes, où l'absorbeur de choc est formé à partir d'une plaque métallique découpée au laser.

13. Absorbeur de choc à utilisation pour un seul choc selon l'une quelconque des revendications précédentes, dans lequel la dimension la plus étroite du pont est la dimension la plus étroite de la partie de l'absorbeur de choc située entre les premier et deuxième points d'application de charge (6. 5).

14. Dispositif d'arrêt des chutes comprenant un ou plusieurs absorbeurs de chocs à utilisation pour un seul choc selon l'une quelconque des revendications 1 à 13.

15. Système d'arrêt des chutes comprenant un dispositif d'arrêt des chutes selon la revendication 14.
